(19) Europäisches Patentamt
European Patent Office
Office européen des brevets

(11) Veröffentlichungsnummer: **0 006 154**
**B1**

(12) # EUROPÄISCHE PATENTSCHRIFT

(45) Veröffentlichungstag der Patentschrift: **10.11.82**

(51) Int. Cl.³: **C 09 B 29/20,** C 08 K 5/23, C 07 D 333/32, C 07 D 333/36

(21) Anmeldenummer: **79101651.2**

(22) Anmeldetag: **30.05.79**

(54) **Monoazopigmente und deren Verwendung zum Pigmentieren von hochmolekularem organischem Material.**

(30) Priorität: **09.06.78 CH 6319/78**

(43) Veröffentlichungstag der Anmeldung: **09.01.80 Patentblatt 80/1**

(45) Bekanntmachung des Hinweises auf die Patenterteilung: **10.11.82 Patentblatt 82/45**

(84) Benannte Vertragsstaaten: **CH DE FR GB IT**

(56) Entgegenhaltungen:
**US-A-1 758 385**
**US-A-2 625 542**

**Colour Index, Volume 3, pages 3267–3268**

(73) Patentinhaber: **CIBA-GEIGY AG, Patentabteilung Postfach, CH-4002 Basel (CH)**

(72) Erfinder: **Hari, Stefan, Dr., Feldstrasse 49, CH-4123 Allschwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 006 154 B1

# Monoazopigmente und deren Verwendung zum Pigmentieren von hochmolekularem organischem Material

Die vorliegende Erfindung betrifft neue wertvolle Monoazopigmente der Formel I

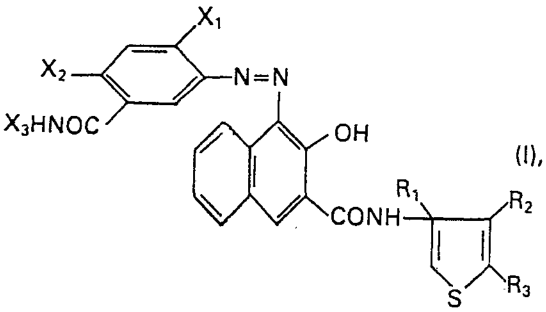

(I),

worin $R_2$ eine Methylgruppe, $R_1$ eine Cyanogruppe oder eine Gruppe $-COOR_6$ und $R_3$ eine Gruppe $-COOR_6$ bedeuten, worin $R_6$ Methyl oder Aethyl, $X_1$ und $X_2$ Wasserstoff, Halogen, Alkyl oder Alkoxy mit 1–4 C-Atomen sind, $X_3$ eine gegebenenfalls ein-, zwei- oder dreimal gleich oder verschieden durch Chlor, Alkyl oder Alkoxy mit 1–4 C-Atomen, Trifluormethyl oder einer Gruppe der Formeln $-COOX_4$, $-CONHX_4$, $-NHCOX_4$ oder $-CONH_2$ substituierte Phenylgruppe und $X_4$ Alkyl mit 1–4 C-Atomen oder gegebenenfalls mit Halogen oder Alkyl mit 1–4 C-Atomen substituiertes Phenyl oder Benzyl bedeuten.

Zu den Monoazopigmenten der Formel I gelangt man, wenn man die Diazoverbindung eines Amins der Formel

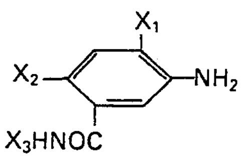

(II)

mit einem Naphthoesäureamid der Formel III

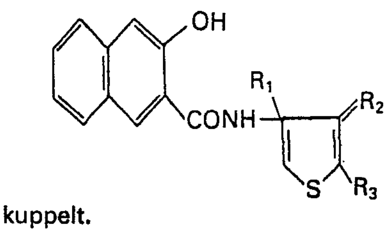

(III)

kuppelt.

Die Amine der Formel II, deren Diazoverbindungen als Diazokomponenten zur Herstellung der erfindungsgemässen Pigmente dienen, sind allgemein bekannt und können nach bekannten Methoden hergestellt werden.

Folgende Beispiele für solche Amine seien genannt:

1-Amino-2-chlorbenzol-5-carbonsäure-phenylamid

1-Amino-2,4-dichlorbenzol-5-carbonsäure-phenylamid

1-Amino-2,4-dichlorbenzol-5-carbonsäure-4'-chlor-2'-methylphenylamid

1-Amino-2,4-dichlorbenzol-5-carbonsäure-2'-chlor-5'-trifluormethylphenylamid

1-Amino-2-methylbenzol-5-carbonsäure-phenylamid

1-Amino-2-methylbenzol-5-carbonsäure-benzylamid

1-Amino-2-methylbenzol-5-carbonsäure-2'-chlorphenylamid

1-Amino-2-methylbenzol-5-carbonsäure-4'-chlorphenylamid

1-Amino-2-methylbenzol-5-carbonsäure-2',4'-dichlorphenylamid

1-Amino-2-methylbenzol-5-carbonsäure-2'.methylphenylamid

1-Amino-2-methylbenzol-5-carbonsäure-4'-methylphenylamid

1-Amino-2-methylbenzol-5-carbonsäure-4'-methoxy-phenylamid

1-Amino-2-methylbenzol-5-carbonsäure-4'-chlor-2'-methylphenylamid

1-Amino-2-methylbenzol-5-carbonsäure-4'-chlor-3'-methylphenylamid

1-Amino-2-methylbenzol-5-carbonsäure-3'-trifluormethylphenylamid

1-Amino-2-methoxybenzol-5-carbonsäure-phenylamid

1-Amino-2-methoxybenzol-5-carbonsäure-2'-methyl-5'-chlor-phenylamid

1-Amino-2-methoxybenzol-5-carbonsäure-2'-methyl-3'-chlorphenylamid

1-Amino-2-methoxybenzol-5-carbonsäure-2'-chlor-5'-trifluormethyl-phenylamid

1-Amino-2-methoxybenzol-5-carbonsäure-2',5'-dichlor-phenylamid

1-Amino-2-chlorbenzol-5-carbonsäure-2',4'-dichlor-phenylamid

1-Amino-2-chlorbenzol-5-carbonsäure-2'-chlorphenylamid

1-Amino-2-chlorbenzol-5-carbonsäure-2'-chlor-5'-methoxycarbonyl-phenylamid

1-Amino-2-chlorbenzol-5-carbonsäure-2'-methyl-phenylamid

1-Amino-2-chlorbenzol-5-carbonsäure-3'-trifluormethyl-phenylamid

1-Amino-2-chlorbenzol-5-carbonsäure-2'-chlor-5'-trifluormethyl-phenylamid

1-Amino-2-chlorbenzol-5-carbonsäure-2'-methyl-3'-chlor-phenylamid

1-Amino-2-chlorbenzol-5-carbonsäure-2'-methyl-5'-chlor-phenylamid

1-Amino-2-methylbenzol-5-carbonsäure-2'-,5'-dichlor-phenylamid

1-Amino-2-methylbenzol-5-carbonsäure-3'-chlor-phenylamid

1-Amino-2-methylbenzol-5-carbonsäure-2'-chlor-5'-trifluormethyl-phenylamid

1-Amino-2-methylbenzol-5-carbonsäure-2'-methoxy-phenylamid

1-Amino-2-methylbenzol-5-carbonsäure-2'-trifluormethyl-4'-chlor-phenylamid

1-Amino-2-äthoxybenzol-5-carbonsäure-3'-chlor-phenylamid

1-Amino-2-äthoxybenzol-5-carbonsäure-4'-methyl-phenylamid

1-Amino-2-äthoxybenzol-5-carbonsäure-2'-methyl-5'-chlor-phenylamid.

Die Kupplungskomponenten entsprechen der

allgemeinen Formel III. Sie können nach bekannten Verfahren, beispielsweise durch Umsetzung des 2-Hydroxy-3-naphthoesäurechlorids mit dem entsprechenden Aminothiophenderivat hergestellt werden. Als Beispiele seien folgende Aminothiophene genannt:

2-Amino-3,5-dicarbäthoxy-4-methyl-thiophen

2-Amino-3,5-dicarbmethoxy-4-methyl-thiophen

2-Amino-3-cyan-4-methyl-5-thiophencarbonsäuremethylester

2-Amino-3-cyan-4-methyl-thiophencarbonsäureäthylester.

Die Diazotierung erfolgt nach bekannten Methoden.

Die Kupplung findet vorzugsweise in schwach saurem Medium statt, zweckmässig in Gegenwart gebräuchlicher, die Kupplung fördernder Mittel. Als solche seien insbesondere Dispergiermittel genannt, beispielsweise Aralkylsulfonate, wie Dodecylbenzolsulfonat, oder 1,1'-Dinaphthylmethan-2,2'-disulfonsäure oder Polykondensationsprodukte von Alkylenoxiden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z.B. Tetrachlorkohlenstoff oder Trichloräthylen, ferner mit Wasser mischbare organische Lösungsmittel, wie Aceton, Methyläthylketon, Methanol, Aethanol oder Isopropanol oder vorzugsweise Dimethylformamid.

Man kann die Kupplung auch vorteilhaft in der Weise durchführen, dass man eine saure Lösung des Diazoniumsalzes mit einer alkalischen Lösung der Kupplungskomponente in einer Mischdüse kontinuierlich vereinigt, wobei eine sofortige Kupplung der Komponenten erfolgt. Es ist darauf zu achten, dass Diazokomponente und Kupplungskomponente in äquimolekularen Mengen in der Mischdüse vorhanden sind, wobei es sich als vorteilhaft erweist, einen geringen Überschuss der Diazokomponente zu verwenden. Dies wird am einfachsten durch Kontrolle des pH-Wertes der Flüssigkeit in der Mischdüse bewirkt. Auch ist in der Mischdüse für eine starke Durchwirbelung der beiden Lösungen zu sorgen. Die entstandene Farbstoffdispersion wird der Mischdüse laufend entzogen und der Farbstoff durch Filtration abgetrennt.

Schliesslich kann die Kupplung auch so vollzogen werden, dass man das Amin mit der Kupplungskomponente im Molverhältnis 1:1 in einem organischen Lösungsmittel suspendiert und mit einem diazotierenden Mittel, insbesondere einem Ester der salpetrigen Säure, wie Methyl-, Aethyl-, Butyl-, Amyl- oder Oktylnitrit oder aber mit wässriger Natriumnitritlösung behandelt.

Die erfindungsgemässen Pigmente können z.B. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solche, die über 100° C sieden, kann, wenn erwünscht, oft eine Verbesserung der Eigenschaften erreicht werden. Als besonders geeignet erweisen sich, durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Aether, wie Aethylenglykolmonomethyl- oder Monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200° C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemäss erhaltenen Pigmente eignen sich zum Färben von hochmolekularem organischem Material natürlicher oder künstlicher Herkunft. Es kann sich z.B. um Naturharze, trocknende Oele oder Kautschuk handeln. Es kann sich aber auch um abgewandelte Naturstoffe handeln, beispielsweise um Chlorkautschuk, um ölmodifizierte Alkydharze oder um Viskose oder um Cellulosederivate wie Acetylcellulose und Nitrocellulose, und besonders um vollsynthetische organische Polyplaste, das heisst, um Kunststoffe, die durch Polymerisation, Polykondensation und Polyaddition hergestellt sind. Aus der Klasse dieser Kunststoffe seien besonders folgende genannt: Polyäthylen, Polypropylen, Polyisobutylen, Polystyrol, Polyvinylchlorid, Polyvinylacetat, Polyacrylnitril, Polyacrylsäure- und Polymethacrylsäureester; Polyester, insbesondere hochmolekulare Ester aromatischer Polycarbonsäuren mit polyfunktionellen Alkoholen; Polyamide; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste; die als Lackharze verwendeten Polyester, und zwar sowohl gesättigte, wie z.B. Alkydharze, als auch ungesättigte, wie beispielsweise Maleinatharze, und ferner die unter den Namen «Epoxydharze» bekannten Polyadditions- bzw. Polykondensationsprodukte von Epichlorhydrin mit Polyolen oder Polyphenolen; ferner die sogenannten Thermoplaste, d.h. die nicht härtbaren Polyplaste. Es sei betont, dass nicht nur die einheitlichen Verbindungen, sondern auch Gemische von Polyplasten, sowie Mischkondensate und Mischpolymerisate, wie z.B. solche auf Basis von Butadien, erfindungsgemäss pigmentiert werden können.

Die erfindungsgemässen Pigmente sind für das Färben von Polyplasten, wie von als Lackrohstoffe bekannten, sogenannten Filmbildnern oder Bindemitteln, besonders von Leinölfirnis, Nitrocellulose, Alkydharzen, Melaminharzen und Harnstoff-Formaldehydharzen besonders geeignet. Die Pigmentierung der hochmolekularen, organischen Substanzen mit den Pigmenten der Formel (I) erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polyplasten eingearbeitet werden. Es ist ferner möglich, zwecks Erzielung verschiedener Farbtöne den hochmolekularen, organischen Stoffen neben den Verbindungen der Formel (I) noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die Verbindungen der Formel (I) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel (I), bezogen auf den zu pigmentierenden hochmolekularen organischen Stoff; dabei enthalten Polyplaste und Lacke vorzugsweise 0,1 bis 5 Gew.-% Druckfarben, vorzugsweise 10–30 Gew.-%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polyplast.

Die erfindungsgemässen Farbstoffe zeichnen sich durch leichte Zugänglichkeit, gute Hitze-, Licht-, Überlackier-, Migrations- und Wetterechtheit und insbesondere durch hohe Farbtonreinheit aus. Trotz hohem Molekulargewicht der verwendeten Diazobasen und im Vergleich mit Diazobasen von kleinerem Molekulargewicht zeigen die erfindungsgemässen Pigmente eine hohe Farbstärke.

Von den Pigmenten der US-A-2625542 unterscheiden sich die erfindungsgemässen dadurch, dass ihnen als Diazokomponente kein Monoacyldialkoxyphenylendiamin, sondern ein m-Aminobenzoesäureanilid zugrundeliegt und dass der Thiophenylrest in 3-, 4- und 5-Stellung substituiert ist.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiel 1:

4,9 Teile 3-Amino-4,2'-dichlor-5'-trifluormethylbenzanilid werden in 65 Vol.-Teilen Eisessig bei 56° gelöst. Die hellgelbe Lösung wird mit 7,5 Vol.-Teilen 37%iger Salzsäure verrührt, die entstehende weisse Suspension (Chlorhydrat) mit 15 Teilen Wasser verdünnt, auf 5° abgekühlt, in 8 Minuten und bei 5° mit 3,8 Vol.-Teilen 4 N-Natriumnitritlösung tropfenweise versetzt und die erhaltene Diazolösung klarfiltriert. Man löst danach 6 Teile 3,5-Dicarbäthoxy-4-methy-2-(2'-hydroxy-3'-naphthoylamino)-thiophen mit 5 Vol.-Teilen 30%iger Natronlauge in 110 Teilen Wasser und 250 Vol.-Teilen Alkohol bei 42°. Die orange Lösung wird filtriert, auf 8° abgekühlt und bei dieser Temperatur in 10 Minuten mit der Diazolösung tropfenweise versetzt. Es entsteht dabei ein roter Niederschlag. Die erhaltene Suspension wird durch Zugabe von 40 Vol.-Teilen 30%iger wässriger Natriumhydroxydlösung auf einen pH-Wert von 5 eingestellt, während 4 Stunden bei bis auf 20° steigender Temperatur gerührt, dann im Laufe einer Stunde auf 75° erhitzt und schliesslich heiss abgenutscht. Der Rückstand wird salzfrei gewaschen und im Vakuum bei 60° getrocknet. Man erhält 10 Teile, entsprechend 91% d.Th., eines roten Pulvers der Formel

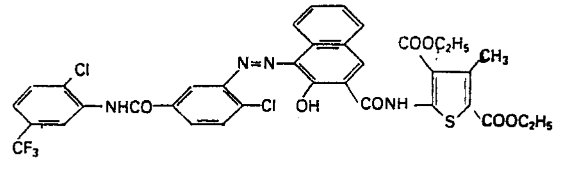

Das in Dimethylformamid nachbehandelte Pigment (1 Std. bei 151°) erzeugt in Polyvinylchlorid echte, farbstarke und brillante scharlachrote Färbungen.

Analyse:

Ber.: C 54.90, H 3.46, Cl 9.00, F 7.24, N 7.11, S 4.07%

Gef.: C 54.7, H 3.5, Cl 8.6, F 7.2, N 7.2, S 4.2%

Das 3,5-Dicarbäthoxy-4-methyl-2-(2'-hydroxy-2'-naphthoylamino)-thiophen kann folgenderweise hergestellt werden: die Suspension von 19 Teilen 2-Hydroxy-3-naphthoesäure in 100 Vol.-Teilen getrocknetem Chlorbenzol wird mit 12,6 Teilen Thionylchlorid und 3 Tropfen Dimethylformamid versetzt, in 15 Minuten auf 74° erhitzt und 1 Std. bei dieser Temperatur gerührt. Man beobachtet eine lebhafte Gasentwicklung und es entsteht eine gelbe Lösung.

Man löst danach 25,7 Teile 2-Amino-3,5-dicarbäthoxy-4-methylthiophen in 175 Vol.-Teilen getrocknetem Chlorbenzol bei 60° auf und lässt die Lösung innerhalb 1 Min. in die Säurechloridlösung zutropfen. Die entstehende Lösung wird in 30 Min. auf 128° erhitzt, 15 Std. bei dieser Temperatur gerührt und anschliessend erkalten lassen. Der ausgefallene gelbe Niederschlag wird abgenutscht und nacheinander mit Methanol und heissem Wasser gewaschen. Nach dem Trocknen im Vakuum bei 60° erhält man 31,5 Teile (73,7% d.Th.) eines blassgelben Pulvers.

Der Schmelzpunkt des Produktes beträgt 190–192°.

Analyse:

Ber.: C 61.81, H 4.95, N 3.28, S 7.50%

Gef.: C 62.0, H 4.95, N 3.3, S 7.6%

In der nachfolgenden Tabelle sind weitere Pigmente aufgeführt, die man erhält, wenn man die Diazoverbindungen der in Kolonne II genannten Amine nach den Angaben des Beispiels 1 mit 3,5-Dicarbäthoxy-4-methyl-2-(2'-hydroxy-3'-naphthoylamino)-thiophen kuppelt. Kolonne III gibt das bei der Rekristallisation verwendete Lösungsmittel und Kolonne IV die Nuance des mit dem Pigment gefärbten Polyvinylchlorids an.

| Bsp. | Diazokomponente | Lösungsmittel | Nuance in PVC |
|---|---|---|---|
| 2 | 3-Amino-4,2',4',5'-tetrachlorbenzanilid | N-Methyl-pyrrolidon | scharlach |
| 3 | 3-Amino-4,2'-dichlor-5'-carbamyl-benzanilid | Dimethylformamid | scharlach |
| 4 | 1-Amino-2-chlorbenzol-5-carbonsäure-4'-benzoylamino-phenylamid | Dimethylformamid | orangerot |
| 5 | 3-Amino-4,2',5'-trichlorbenzanilid | Dimethylformamid | scharlach |
| 6 | 3-Amino-4,2',3',4'-tetrachlorbenzanilid | N-Methyl-pyrrolidon | rot |
| 7 | 3-Amino-4,2'-dichlor-5-carbomethoxy-benzanilid | Dimethylformamid | rotorange |
| 8 | 3-Amino-4-chlor-2',4'-dimethyl-benzanilid | Dimethylformamid | rot |
| 9 | 3-Amino-4-chlorbenzol-5-carbonsäure-(2',5'-dimethoxy-4'-benzoylamino)-phenylamid | Dimethylformamid | rot |
| 10 | 4-(3'-Amino-4'-chlorbenzoylamino)-2"-chlor-5"-trifluormethyl-benzanilid | Dimethylformamid | scharlach |
| 11 | 3-(3'-Amino-4'-chlorbenzoylamino)-4,3",5"-trichlorbenzanilid | Dimethylformamid | orange |
| 12 | 3-(3'-Amino-4'-chlorbenzoylamino)-4,4"-dichlor-2",5"-dimethoxybenzanilid | Dimethylformamid | orange |
| 13 | 1-Amino-2-methyl-5-carbonsäure-4'-benzoylamino-phenylanilid | Dimethylformamid | rubinrot |

Weitere Pigmente aus 3-Cyan-4-methyl-5-carbomethoxy-2-(2'-hydroxy-3'-naphthoylamino)-thiophen:

| Bsp. | Diazokomponente | Lösungsmittel | Nuance in PVC |
|---|---|---|---|
| 14 | 3-Amino-4,2',4',5'-tetrachlorbenzanilid | N-Methyl-pyrrolidon | rotviolett |
| 15 | 3-Amino-4,2'-dichlor-5'-trifluormethyl-benzanilid | N-Methyl-pyrrolidon | rubinrot |
| 16 | 3-Amino-4,4'-dichlor-2',5'-dimethoxy-benzanilid | Dimethylformamid | braun |
| 17 | 1-Amino-2-chlorbenzol-5-carbonsäure-4'-benzoyl-amino-phenylamid | N-Methyl-pyrrolidon | rot |
| 18 | 3-(3-Amino-4'-chlorbenzoylamino)4-chlorbenzanilid | Dimethylformamid | rot |
| 19 | 3-Amino-4,2'-dichlorbenzanilid | Dimethylformamid | rot |
| 20 | 3-Amino-4-chlor-2',4'-dimethyl-benzanilid | Dimethylformamid | rot |
| 21 | 3-Amino-4,2',3',4'-tetrachlorbenzanilid | N-Methyl-pyrrolidon | braun |
| 22 | 3-(3'-Amino-4'-chlorbenzoylamino)-4,3",5"-trichlorbenzanilid | N-Methyl-pyrrolidon | rubinrot |
| 23 | 3-Amino-4-chlor-2',5'-dimethoxy-4'-benzoylaminobenzanilid | N-Methyl-pyrrolidon | carmin |
| 24 | 3-Amino-4-methoxy-benzanilid | Dimethylformamid | violett |
| 25 | 3-Amino-4-methoxy-4'-benzoylamino-benzanilid | N-Methyl-pyrrolidon | violett |
| 26 | 3-Amino-4-methyl-4'-benzoylamino-benzanilid | N-Methyl-pyrrolidon | carmin |

Pigmente aus 3-Carbäthoxy-4-methyl-5-carbomethoxy-2-(2'-hydroxy-3'-naphthoylamino)-thiophen:

| Bsp. | Diazokomponente | Lösungsmittel | Nuance in PVC |
|---|---|---|---|
| 27 | 3-Amino-4,2'-dichlor-5'-trifluormethyl-benzanilid | Dimethylformamid | scharlach |
| 28 | 3-Amino-4,2',4',5'-tetrachlor-benzanilid | N-Methyl-pyrrolidon | rot |
| 29 | 3-Amino-4-chlor-4'-benzoylamino-benzanilid | Dimethylformamid | scharlach |
| 30 | 3-Amino-4,2',5'-trichlorbenzanilid | Dimethylformamid | rot |

Pigmente aus 3,5-Dicarbomethoxy-4-methyl-2-(2'-hydroxy-3'-naphthoylamino)-thiophen:

| Bsp. | Diazokomponente | Lösungsmittel | Nuance in PVC |
|---|---|---|---|
| 31 | 3-Amino-4,2'-dichlor-5'-trifluormethyl-benzanilid | Dimethylformamid | scharlach |
| 32 | 3-Amino-4,2',4',5'-tetrachlorbenzanilid | N-Methyl-pyrrolidon | rot |
| 33 | 3-Amino-4-chlor-4'-benzoylamino-benzanilid | N-Methyl-pyrrolidon | rubinrot |
| 34 | 3-Amino-4,2',5'-trichlor-benzanilid | Dimethylformamid | rot |
| 35 | 3-Amino-4-methoxy-benzanilid | Dimethylformamid | carmin |

Beispiel 36:

5,2 Teile 3-Amino-4,2'-dichlor-5'-trifluormethyl-benzanilid und 6,4 Teile 3,5-Dicarbäthoxy-4-methyl-2-(2'-hydroxy-3'-naphthoylamino)-thiophen werden in 150 Vol.-Teilen Dimethylformamid bei 62° gelöst. Die klare grünliche Lösung wird mit 1,3 Vol.-Teilen 37%iger Salzsäure vermischt und danach in 10 Minuten mit 4,1 Vol.-Teilen 4 N-Natriumnitritlösung tropfenweise versetzt. Es fällt ein dicker roter Niederschlag aus, die Temperatur steigt auf 76° an. Die rote Suspension wird 30 Minuten bei 76° gerührt, auf 136° erhitzt, weitere 30 Minuten bei dieser Temperatur gerührt, auf 90° abgekühlt und heiss abgenutscht. Der Rückstand wird schliesslich nacheinander mit Dimethylformamid, heissem Wasser und heissem Methanol gewaschen und im Vakuum bei 60° getrocknet. Man erhält 9,4 Teile Produkt (79% d.Th.), das die gleiche Formel und die gleichen färberischen Eigenschaften aufweist, wie das im Beispiel 1 beschriebene Pigment.

Beispiel 37:

0,6g des nach Beispiel 1 hergestellten Pigments werden mit 67g Polyvinylchlorid, 33g Dioctylphthalat, 2g Dibutylzinndilaurat und 2g Titandioxyd zusammengemischt und auf einem Walzenstuhl während 15 Minuten bei 160° zu einer dünnen Folie verarbeitet. Die so erzeugte scharlachrote Färbung ist farbstark, migrations- und lichtecht.

Beispiel 38:

1,00g des nach Beispiel 1 hergestellten Pigments wird mit 4,00g Druckfirnis der Zusammensetzung

29,4% Leinöl-Standöl (300 Poise: 30 Pas)
67,2% Leinöl-Standöl (20 Poise: 2 Pas)
2,1% Kobaltoctoat (8% Co) und
1,3% Bleioctoat (25% Pb)

auf einer Engelsmann-Anreibmaschine fein angerieben und hierauf mit Hilfe eines Klischees im Buchdruckverfahren mit 1 g/m² auf Kunstdruckpapier gedruckt. Man erhält einen starken, reinen scharlachroten Ton mit guter Transparenz und gutem Glanz.

Das Pigment eignet sich auch für andere Druckverfahren, wie Tiefdruck, Offsetdruck, Flexodruck und ergibt hier ebenfalls sehr gute Resultate.

Beispiel 39:

15g einer 35% Butanol enthaltenden Kollodiumwolle, 15g eines mit Ricinusöl modifizierten Phthalatharzes, 15g einer 70%igen butanolischen Lösung eines Harnstofflackharzes, 20g Butylacetat, 10g Glykolmonoäthyläther, 20g Toluol und 5g Alkohol werden zu einem Lack verarbeitet. Dieser wird anschliessend mit 2g des Farbstoffes gemäss Beispiel 1 und 2g des Titandioxyd (Rutil) pigmentiert und gemahlen. Nach dem Spritzen auf Karton und Trocknen des Lackes erhält man einen scharlachroten Überzug von sehr guter Licht- und Überlackierechtheit.

Beispiel 40:

Zu 100g eines Einbrennlackes, der aus 58,5g einer 60%igen Lösung eines Kokosalkydharzes (Beckosol 27/320) in Xylol, 23g einer 65%igen Lösung eines Melaminlackharzes (Super Bekkamin 13/501) in Butanol, 17g Xylol und 1,5g Butanol besteht, gibt man 1g des Farbstoffes gemäss Beispiel 1 und 5g Titandioxyd. Man mahlt das Gemisch 48 Stunden in einer Kugelmühle und spritzt den so pigmentierten Lack auf eine gereinigte Metalloberfläche. Nach dem Einbrennen bei 120° erhält man eine scharlachrote Färbung von guter Licht- und Überlackierechtheit.

**Patentansprüche**

1. Monoazopigmente der Formel I

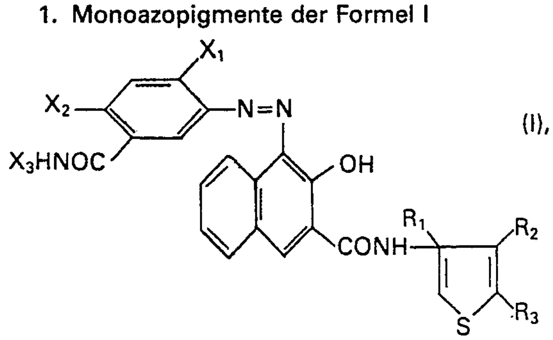

(I),

worin $R_2$ eine Methylgruppe, $R_1$ eine Cyanogruppe oder eine Gruppe $-COOR_6$ und $R_3$ eine Gruppe $-COOR_6$ bedeuten, worin $R_6$ Methyl oder Aethyl, $X_1$ und $X_2$ Wasserstoff, Halogen, Alkyl oder Alkoxy mit 1–4 C-Atomen sind, $X_3$ eine gegebenenfalls ein-, zwei- oder dreimal gleich oder verschieden durch Chlor, Alkyl oder Alkoxy mit 1–4 C-Atomen, Trifluormethyl oder einer Gruppe der Formeln $-COOX_4$, $-CONHX_4$, $-NHCOX_4$ oder $-CONH_2$ substituierte Phenylgruppe und $X_4$ Alkyl mit 1–4 C-Atomen oder gegebenenfalls mit Halogen oder Alkyl mit 1–4 C-Atomen substituiertes Phenyl oder Benzyl bedeuten.

2. Verfahren zum Pigmentieren von hochmolekularem organischem Material, gekennzeichnet durch die Verwendung der Pigmente des Anspruchs 1.

3. Das gemäss Anspruch 2 erhaltene pigmentierte Material.

**Claims**

1. A monoazo pigment of the formula I

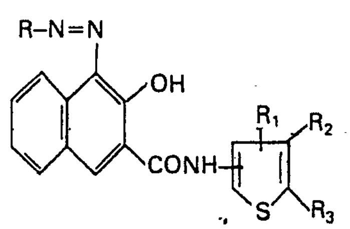

(I)

wherein $R_2$ is a methyl group, $R_1$ is a cyano group or a $-COOR_6$ group and $R_3$ is a $-COOR_6$ group, in which $R_6$ is methyl or ethyl, $X_1$ and $X_2$ are hydrogen, halogen, alkyl or alkoxy of 1 to 4 carbon atoms, $X_3$ is a phenyl group which is unsubstituted or mono-, di- or trisubstituted by the same or different members of the group consisting of chlorine, alkyl or alkoxy of 1 to 4 carbon atoms, trifluoromethyl or a group of the formula $-COOX_4$, $-CONHX_4$, $-NHCOX_4$ or $-CONH_2$, and $X_4$ is alkyl of 1 to 4 carbon atoms, phenyl or benzyl which are unsubstituted or substituted by halogen or alkyl of 1 to 4 carbon atoms.

2. A process for pigmenting high molecular organic material, which comprises the use of a pigment as claimed in claim 1.

3. Material pigmented according to claim 2.

**Revendications**

1. Pigments monoazoïques répondant à la formule (I):

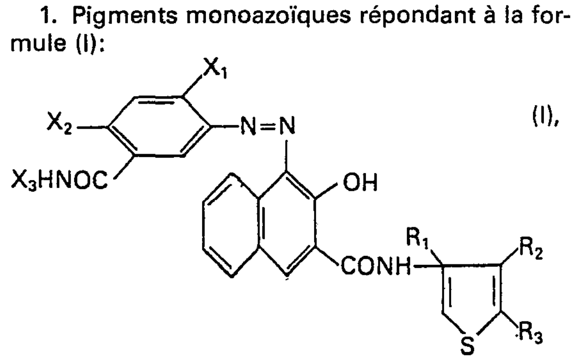

(I),

dans laquelle $R_2$ représente un radical méthyle, $R_1$ représente un radical cyano ou $-COOR_6$, $R_3$ représente un radical $COOR_6$, le symbole $R_6$ désignant un radical méthyle ou éthyle, $X_1$ et $X_2$ représentent chacun l'hydrogène, un halogène ou un radical alkyle ou alcoxy contenant de 1 à 4 atomes de carbone, et $X_3$ représente un radical phényle éventuellement porteur d'un, deux ou trois substituants, identiques ou différents, pris dans l'ensemble constitué par le chlore, les alkyles et alcoxys en $C_1$–$C_4$, le trifluorométhyle et les radicaux $-COOX_4$, $-CONHX_4$, $-NHCOX_4$ et $-CONH_2$, le symbole $X_4$ désignant un alkyle en $C_1$–$C_4$ ou un radical phényle ou benzyle éventuellement porteur d'un halogène ou d'un alkyle en $C_1$–$C_4$.

2. Procédé pour pigmenter des matières organiques macromoléculaires, procédé caractérisé en ce qu'on utilise des pigments selon la revendication 1.

3. Matières qui ont été pigmentées par le procédé de la revendication 2.